# EUROPEAN PATENT APPLICATION

(11) **EP 4 687 066 A1**
(43) Date of publication of application: **04.02.2026**
(21) Application number: 24306291.6
(22) Date of filing: 31.07.2024
(51) Int. Cl.: G06K 19/02, G06K 19/077

(54) **DATA CARRIER AND METHOD PRODUCING SUCH A DATA CARRIER**

(71) Applicant: THALES DIS FRANCE SAS, 92190 Meudon (FR)
(72) Inventor: TIBILETTI, Lucie, 13600 La Ciotat (FR); BRAITHWAITE, Gregory, 13600 La Ciotat (FR); DELLYS, Alexis, 13390 Auriol (FR); PENAUD, Claude-Eric, 13100 Aix-en-Provence (FR); ODDOU, Laurent, 13390 Auriol (FR); SEBAN, Frédérick, 13390 Auriol (FR)
(74) Representative: Castelo, Jérôme

(57) **Abstract**

A data carrier (1) comprises a metal layer (5) with a recess (11), an electronic module (2) comprising a chip and being embedded in said recess (11), and a plastic layer (6) with embedded antenna wires (8). The electronic module (2) has a shaft portion, wherein chip contacting electric connections (7) are provided on the underside of the electronic module (2). The metal layer (5) has an insulating coating (50) at least on the surfaces of the recess (11). The plastic layer (6) comprises a recess (12) with the same circumference as or smaller than the recess (11) in the insulated metal layer (5') until a depth (15) either revealing the antenna wires (8) or not and each of the electric connections (7) is connecting one of the antenna wires (8) directly or in inductive mode, respectively.

## Description

### TECHNICAL FIELD

The present invention relates to a data carrier comprising a metal layer with a recess, an electronic module comprising a chip and being embedded in said recess, and a plastic layer with embedded antenna wires. The invention also relates to a method of producing such a data carrier.

### PRIOR ART

Smart cards comprise a module with a chip requiring the milling of a cavity to embed the module. Some smart cards have a full front metal surface. The milling and the connection of such cavity in a card having a full front metal surface is difficult. It is difficult to mill in full metal and to mill in a mix of materials comprising inter alia metal. Additionally, when the material or material mix comprises a metal, it is difficult to connect on a deep inlay and it may lead to short circuit when the module is connected with a conductive material.

Applicant has disclosed a data carrier in EP 4 202 763 A1 comprising at least a first metallic layer; at least one electronic module; at least one antenna; and at least a second metallic layer, wherein the second metallic layer is arranged after the first metallic layer with respect to an extension direction, and wherein the antenna is in connection with the electronic module, wherein the first metallic layer is a continuous metallic layer delimiting a recess, and wherein the electronic module is at least partially arranged within said recess. EP 4 202 763 also discloses a method for producing said data carrier.

A similar smartcard with a metal card body (MCB) is disclosed in US 2019/114526 A1. Said metal smartcard has a card body comprising a stackup of at least two metal layers, each of the metal layers having a discontinuity in the form of a slit or nonconductive stripe extending through the layer from an outer edge of the layer to an interior position thereof; wherein the slit of a given metal layer is positioned or oriented differently than the slit(s) of the other metal layer(s) so that the slits of the at least two metal layers are not aligned with one another.

US 2021/350198 A1 describes a transaction card (smartcard) having a front "continuous" (with no slit) metal layer with an opening for a dual-interface transponder chip module having a module antenna on its bond side. A magnetic shielding layer comprising ferrite material disposed below the front face continuous metal layer. An amplifying element, booster antenna circuit disposed under the magnetic shielding layer. A rear discontinuous metal layer with a slit and a metal ledge surrounding the module opening to function as a coupling frame. A rear plastic layer formed of non-RF impeding material may support a magnetic stripe and security elements (signature panel and hologram). A portion of the front face continuous metal layer may protrude downward into the magnetic shielding layer and booster antenna circuit layer. The rear discontinuous metal layer may have an additional slit to regulate the activation distance.

EP 4 167 131 A1 from the applicant discloses the use of an anisotropic conductive film (ACF) to attach a module in a metal plate smart card encompassed by PVC layers.

### SUMMARY OF THE INVENTION

Based on this prior art it is an object of the invention to provide a method to build such a smart card with a full metal surface in a more efficient way as well as providing such a data carrier.

A method of producing a data carrier having a metal layer with a recess, an electronic module comprising a chip embedded in said recess, and a plastic layer with embedded antenna wires, wherein the antenna wires are contacting the chip, comprises the features of claim 1.

It comprises the method steps of
- forming a recess in the metal layer;
- coating the metal layer with an insulating coating creating an insulated metal layer;
- laminating a plastic layer onto the insulated metal layer;
- milling through the recess in the insulated metal layer into the plastic layer; and
- inserting the electronic module into the recess.

It is an advantage of the invention providing simplicity during the milling step, since only one plan is to be done, and give also simplicity for the connection step as module contain already connection elements. The invention is based inter alia on the insight that using a pre-milled metal piece which is then coated with an insulating varnish or coating prevents short circuit effects. This is especially advantageous, when, after the lamination of a plastics layer to the backside of the metal layer, further milling only happens in the plastic layer so no metallic chips can create short- circuit issues.

The milling step into the plastics layer can comprise a milling with the same circumference as or smaller than the recess in the insulated metal layer either until a depth revealing the antenna wires in the plastics layer or stopping short of them.

Additionally, a further milling step can be provided with milling a reduced recess in the recess creating a lower surface in the plastic layer. Then inserting the electronic module into the recess comprises an insertion into the reduced recess wherein the electronic module comprises at least two electric connections outside its shaft connecting the electronic module with the antenna wires in the plastic layer bringing each of the electric connections into conductive contact with one of the antenna wires.

It is an advantage to conduct the lamination process on the pre-milled metal piece and prevent any deformation by using a temporary and re-usable filling piece for each recess to prevent lamination deformation. In an alternative, it is also possible to use a standard lamination plate on the frontside of the coated metal layer with outgrowth portions being complementary to the recess in the metal layer to obtain essentially the same deformation avoiding effect during lamination.

In an embodiment of the invention covering an inductive mode, not shown in the drawings, the antenna wires are not contacting the chip. In such a mode, there is no physical contact between the module and the antenna. In embodiments shown in the drawings, the antenna wires are contacting the chip. Then the recess with the same circumference as or smaller than the recess in the insulated metal layer ends at a depth not revealing the antenna wires and each of the electric connections is connecting one of the antenna wires in inductive mode.

A data carrier comprises a metal layer with a recess, an electronic module comprising a chip and being embedded in said recess, and a plastic layer with embedded antenna wires, wherein the electronic module has a shaft portion. Then the metal layer has an insulating coating at least on the surfaces of the recess; and each of the electric connections is connecting one of the antenna wires. Preferably, chip contacting electric connections are provided on the underside of the electronic module. In a further embodiment, the plastic layer comprises a recess with the same circumference as or smaller than the recess in the insulated metal layer until a depth revealing the antenna wires.

Although it is possible to ensure the short-circuit avowing effect with the metal layer only having an insulating coating on the surfaces of the recess, it is preferred that the preceding coating step is applied on the entire metal layer which makes this coating step very efficient and allows to obtain with this varnishing step additional effects for handling of the metal layer part in a smart card as a better adhesion of metal to plastic as well as any printing on the top surface is improved.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
Fig. 1A & 1B show the method steps of preparation of a metal plate according to an embodiment of the invention in two schematical sectional views;
Fig. 1C shows a non-scale schematical exploded view of a pre-assemblied cardbody as prepared with the method steps as shown in Fig. 2A, 2B or 2C;
Fig. 2A, 2B & 2C show three alternative methods of lamination of a plastic layer on the metal plate prepared according to the method as shown in Fig. 1A & 1B;
Fig. 3A, 3B & 3C show the method steps of preparation of a data carrier comprising a coated metallic layer, a plastic layer, before including an electronic module, and the data carrier with an included preembedded electronic module in three schematical sectional views;
Fig. 4 shows a view from above on a data carrier based on the method of Fig. 3A, 3B, 3C after introduction of an electronic module; and
Fig. 5 shows an embodiment of a data carrier similar to the embodiment shown in Fig. 3C with a different included preembedded electronic module.

### DESCRIPTION OF PREFERRED EMBODIMENTS

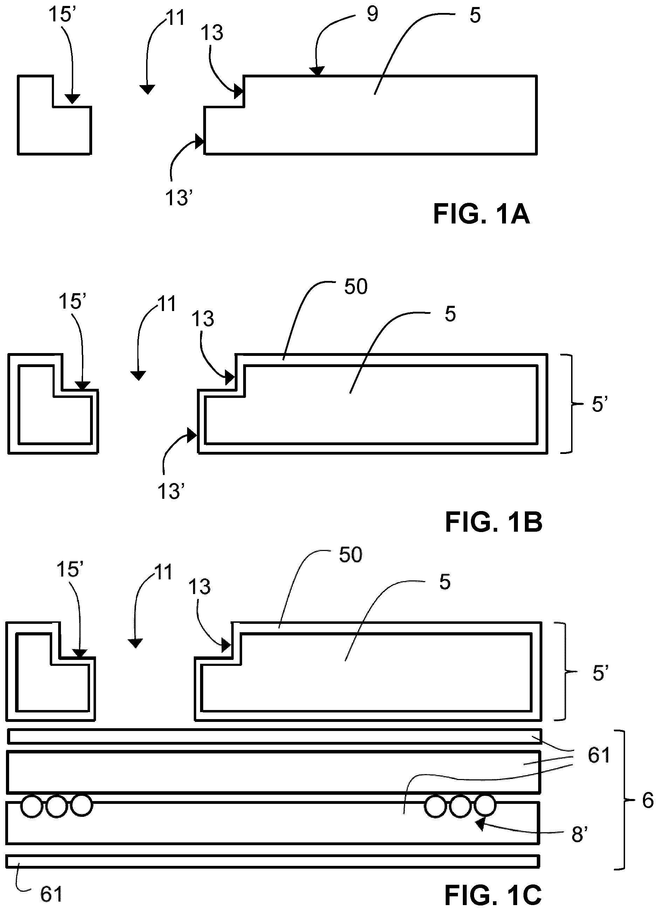

Fig. 1A & 1B show the method steps of preparation of a metal plate 5 according to an embodiment of the invention in two schematical sectional views, Fig. 1A shows the metal plate 5 after the milling step, Fig. 1B the metal plate 5 after the coating step. The method starts with a metal plate 5 having the dimensions of the later smartcard. A hole 11 is cut into the metal plate 5. The hole 11 can be milled, wire cut or prepared by other means known in the prior art. The hole 11 has, starting from the upper surface 9, a first larger diameter circumferential surface 13 ending at a shoulder surface 15' and continued with a second smaller diameter circumferential surface 13', creating a T-shaped hole 11 as shown in Fig. 1A.

In other embodiments, not shown in the drawings, it is possible to prepare only one single diameter 13 hole 11 in the metal plate 5.

After this milling step, the metal plate 5 is coated with an insulating varnish or coating 50 on all sides. It is possible not to coat the underside of the metal plate opposite to the upper surface 9.

It is an advantage of the separate preparation of the metal plate 5, that the insulating varnish avoids connection shortcut when an preembedded electronic module 2 is entered into the hole 11 to create a data carrier 1. A second advantage is the simplification of printing on the metal plate 5.

It is noted that the reference numerals 9, 13, 13', 15 are used for the metal plate 5 of Fig. 1A as well as for the coated insulated metal plate 5', since the coating is thin and does not change the principles of handling of the metal plate 5 within the cardbody 4 which is build based on this insulated metal plate 5'.

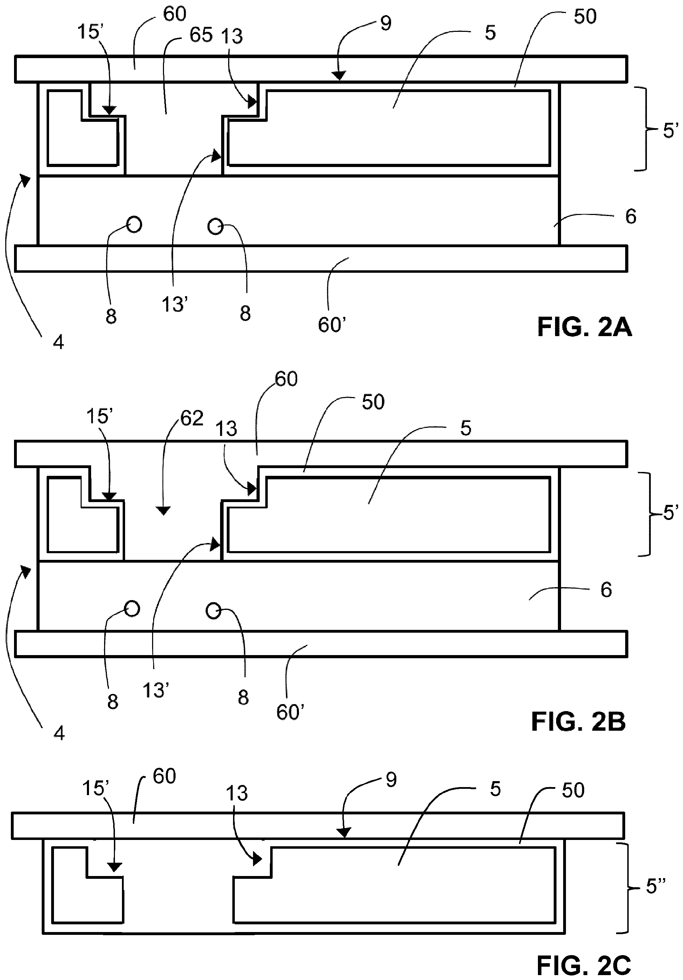

Such a pre-assemblied cardbody 4 is shown in a non-scale schematical exploded view of Fig. 1C which pre-assemblied cardbody 4 can be prepared with the method steps as explained later on in connection with Fig. 2A or 2B. The plastic layer 6 as mentioned throughout the specification is usually built with a plurality of different plastic layer components 61 of plastic layer 6. At least one of the plastic layer components 61 comprises the embedded antenna 8' which is shown as comprising three antenna loops on the underside of the metal plate 5. In the further drawings, only two contacting antenna wires 8 are shown which are connected to the antenna 8'.

Fig. 2A, Fig.2B and Fig. 2C show three alternative methods of lamination of a plastic layer 6 on the coated metal plate 5' prepared according to the method as shown in Fig. 1A & 1B.

As shown in embodiments of Fig. 2A and 2B, antenna wires 8 are schematically shown embedded in the plastic layer 6 at the inside of inner diameter 13' for later contacting as will be explained in connection with the handling of the semi-finished data carrier assembly.

The plastic layer 6 can be built based on a number of different plastic layer components 61 as shown in Fig. 1C.

Fig. 2A shows the positioning of a first lamination plate 60 on top of the upper surface 9 of the coated metal plate 5'. Before positioning the positioning of the first lamination plate 60 a removable filling piece 65 is provided in the hole 11 in the coated metal plate 5'. When a number of metal plates 5' are to be handled simultaneously, then of course one removable filling piece 65 is provided in the hole 11 of each coated metal plate 5'. The removable filling piece 65 can made of metal or any other material that does not stick to the plastic layer during lamination. The filling piece 65 prevents the deformation of the plastic components 61 during lamination. A second lamination plate 60' is provided behind the plastic layer components 61 during lamination.

Fig. 2B shows, in the framework of an alternative preparation of the cardbody 4, the positioning of a first lamination plate 60 on top of the upper surface 9 of the coated metal plate 5'. Here, the first lamination plate 60 comprises metal outgrowths 62 connected in a single piece with the upper lamination plate 60, which upper lamination plate 60 can also be in metal.

Fig. 2C shows a further alternative preparation of the cardbody 4, here limited to the preparation of the coated metal plate 5" without the plastic layer 6 opposite to the lamination plate 60. Here, the filling piece 65 or as part (=outgrowth) of the lamination plate 60 is replaced by the material of the insulating coating 50 and the milling steps are provided in this coating to create the step or steps 15' of the one or two dimensions comprising recess(es).

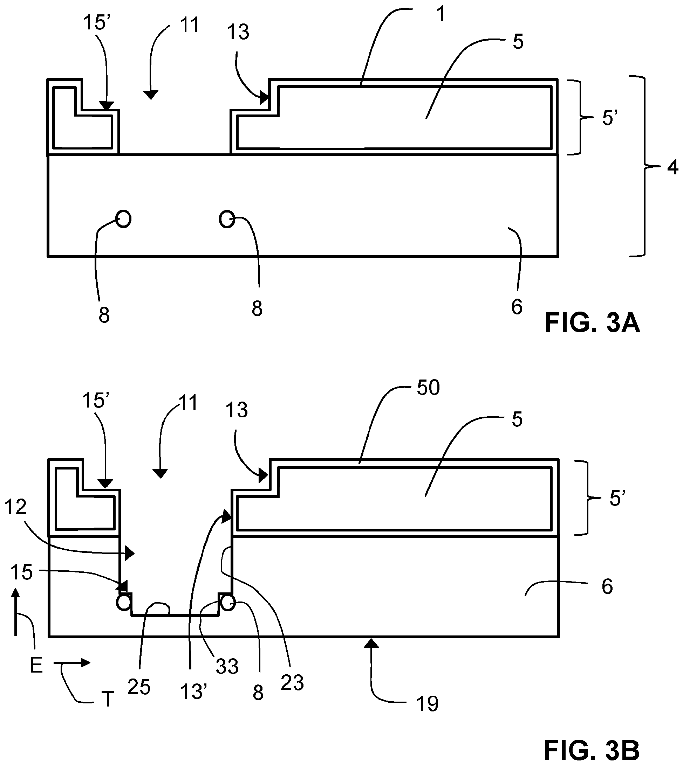

Fig. 3A shows the method steps of preparation of a data carrier 1 comprising a coated metallic layer 5, a plastic layer 6, before including an electronic module 2, in two schematical sectional views. Fig. 3A shows the status of a cardbody 4 for creating the data carrier 1 after lamination of plastic layer 6 and removal of the lower lamination plates 60 as well as the upper lamination plate 60 and, where applicable, the filling pieces, or removal of the upper lamination plate comprising the metallic outgrowth 62.

The advantage of the invention comprises inter alia the possibility to only mill in the plastic material of plastic layer 6, in the recess 11, down to the metallic contacts of the antenna wires 8 which a reconnected to the antenna 8' as shown in Fig. 1C. Since the milling happens exclusively in the plastic material with a diameter of milling being essentially equivalent to the inner circumferential surface 13' of the hole 11 in the coated metal layer 5', the extended hole or milled recess 12 in the plastic layer 6 only provides plastic chips to be evacuated and there is no mixed metal-plastic material.

Fig. 3B shows the plastic layer 6 with the milled recess 12. The size of the milled recess 12 in the plastic layer 6 with respect to the transverse direction T is the size of the first shaft portion of the electronic module behind a larger flange which larger flange will be mounted on the outer bottom surface 15' to the transverse direction T in the recess 11. In other embodiments, the hole 11 has only one circumference, i.e. the first inner surface 13 and the second inner surface 13' have the same size and circumference.

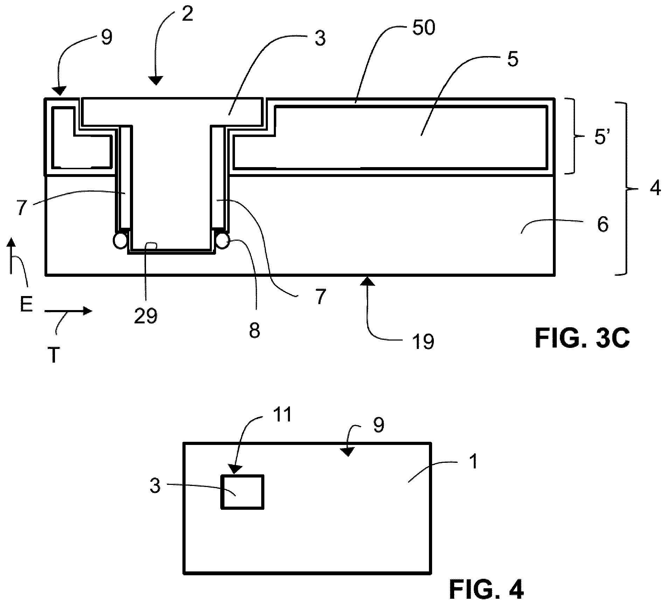

Fig. 3C shows the positioning of the preembedded electronic module 2 in the recesses creating the cardbody 4. The milled recess 12 of the plastics layer 6 is arranged essentially congruent with respect to the extension direction E in prolongation of recess 11. That is, the recess 12 of the plastics layer 6 comprises the same inside wall, forming the first inside surface 23. When seen from the top side 9 of the cardbody 4 towards the bottom side 19 of the cardbody 4, there is provided a second inside surface 33 in the plastics layer 6 having a smaller diameter than the first inside surface 33. Usually, the recess 11 as well as the entire recess 12 down to the inner bottom surface 25 are rectangular or square, so Fig. 3B would be the same image if it would represent a cross-section in the direction which is perpendicular to direction E and perpendicular to direction T. This milled recess 12 has therefore a step and shoulder creating two surfaces, an outer bottom surface 15 and the inner bottom surface 25 being parallel to top side 9 and bottom side 19 of the card body 4. The shoulder is built in a way that the antenna wires 8 in the plastics layer 5 are at a height in which the outer bottom surface 15 reveals the electric contacts the antenna wires 8 are able to contact with the electronic module 3.

The size of inner bottom surface 25 is essentially equal to the size of lower surface 29 of the electronic module 3. This is at the same time the circumference of the shaft of the electronic module 3. This is due to the fact that the preembedded electronic module 2 comprises at least two conductive plots 7 provided adjacent to and surrounding the body of the electronic module 3.

The plots 7 are oriented in the extension direction E of the data carrier 1 which is the direction of the adjacent layers 5 and 6. The extension direction E extends from a top side 9 of the data carrier 1 towards a bottom side 19 of the data carrier 1.

As readily follows from Fig. 3C, the data carrier 1 corresponds to a multi-layer structure wherein layers are arranged above one another with respect to the extension direction E. The top side 9 of the data carrier 1 is provided by the uppermost layer, which corresponds here to the coated metallic layer 5'. The bottom side 19 of the data carrier 1 corresponds to the lowermost layer, which corresponds here to an overlay, here a PVC overlay, as plastic layer 6. It should be noted here that the coated metallic layer 5' forms the outermost layer of the data carrier 1, that is, there is no overlay or the like arranged on the top surface 9 of the first metallic layer 5. In Fig. 3C two plots 7 are shown extending from the surface below the flange of the electronic module to the lower surface contacting the surface 15. Of course, it is possible to provide further plots 7 around the shaft of the electronic module 2.

The advantage of the initial coating of the metal layer 5 is the insulating function, because it ensures that the plots 7 are insulated from the metal layer 5, since the only milling in the recess 11 is done in the plastic layer 6 and the related layer components 61. Within the plastic layer 6 there is no risk of a short circuit, so the plot 7 is only contacting the antenna wire 8 in the shoulder region.

In a view from above on the data carrier 1, as follows from Fig. 4, the coated metallic layer 5' is a continuous coated metallic layer delimiting a recess 11, wherein the coated metallic layer 5' comprises just the said recess 11 and does not comprise any slits or the like that extend into the first metallic layer 5. Furthermore, the coated metallic layer 5 'has the shape of a plate comprising flat or even surfaces. The electronic module 3 as shown in Fig. 3C is fully arranged within said recess 11 so that the upper surface 9 is the same for the electronic module 3 as for the metallic layer 5. In a different embodiment (not shown), the electronic module 3 can also be only partially integrated so that there are positions of the electronic module 3 extending beyond the upper surface 9.

To this end a size (in a view from above) of the recess 11 essentially corresponds to a size of the preembedded electronic module 2 in the region of the arrangement of the electronic module 3 within the recess 11. In fact, the coated metallic layer 5' completely surrounds the electronic module 3 in the region of its arrangement in the recess 11 and when seen along a circumferential direction of the electronic module 3. The region of arrangement of the electronic module 3 in the recess 11 corresponds here to an upper part of the electronic module 3. In fact, said upper part of the electronic module 3 can comprise a pattern of metal contacts that are configured to electrically connect to the electronic module 3 to an external reader. Hence, in such an example the data carrier 1 corresponds to a dual interface smart card or combi-card that is configured to connect its electronic module 3 to an external reader by means of a contact-based connection via the metal contacts as well as contactless via the antenna comprising the antenna wires 8. The antenna preferably corresponds to an RFID antenna. The electronic module 3 preferably corresponds to an RFID module.

The metallic layer 5 of all embodiments can be electrically conductive or electrically nonconductive. Although not depicted in the figures, the metallic layer 5 may comprise at least one personalization element on and/or in its top surface 9. The personalization element can be an image and/or an alphanumeric character and is preferably a print such as an inkjet print or a laser drilling.

As furthermore follows from the figures, an area expansion of the metallic layer 5 corresponds to an area expansion of the data carrier 1 with respect to a transverse direction T running perpendicularly to the extension direction E. In other words, a size of the metallic layer 5 corresponds to a size of the data carrier 1 with respect to the transverse direction T. Again, in other words, the metallic layer 5 extends until an outer edge of the data carrier 1 and is not, for instance, provided only regionally in the data carrier 1.

Modules can be embedded on dual interface cards and smart cards with fingerprint identification by using typical equipment (milling and embedding apparatuses) commonly used in smart card assembly processes.

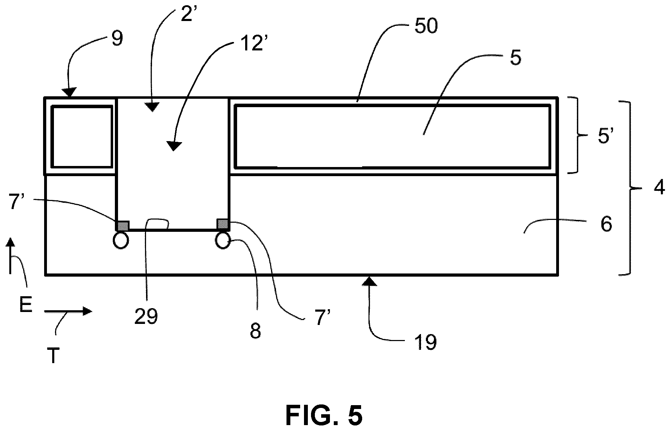

Fig. 5 shows an embodiment of the card body of a data carrier similar to the embodiment shown in Fig. 3C with a different included preembedded electronic module 2'. The description of Fig. 3C also applies to Fig. 5 with the following differences. The alternative electronic module 2' is here a shaft with the electronic connections 7' inside the module 2', the milling simply creates one single recess 12' of an inner diameter equal to the opening in the coated metal layer 5' providing the features of providing a coating as insulation as well as milling only in plastic when the initial recess in the layer 5' has the same diameter as the recess 12'.

This embodiment can also provide an inductive mode, when the electric connections 7' are not connecting to the antenna wires 8 but remain in a distance from them, i.e. the milling stops short of the layer of the antenna wires 8. Such a distance can also be provided in other embodiments as in Fig. 3C when the plots 7 are shorter and end in a distance from antenna wires 8, e.g. when the outer bottom surface 15 of Fig. 3B in the shaft portion is not milled to the level of the antenna wires 8 to provide an inductive mode.

### LIST OF REFERENCE SIGNS

- 1: data carrier
- 2: preembedded electronic module
- 2': preembedded electronic module
- 3: electronic module
- 4: card body
- 5: metallic layer
- 5': coated metal layer
- 5": coated metal layer
- 6: plastic layer
- 7: conductive plot
- 7': integrated electric connections
- 8: antenna wire
- 8': antenna
- 9: top side
- 11: recess / hole / cavity in the metal layer
- 12: milled recess extending in the plastics layer
- 12': milled recess extending in the plastics layer
- 13: first inner surface / side wall
- 13': second inner surface / side wall
- 15: outer bottom surface in the shaft portion
- 15': outer bottom surface for the flange portion
- 19: bottom side
- 23: first inside surface in the plastics layer / wall
- 25: inner bottom surface
- 33: second inside surface in the plastics layer / wall
- 50: insulating coating
- 60: first (upper) lamination plate
- 60': second (lower) lamination plate
- 61: different plastic layer components of plastic layer 6
- 62: outgrowth
- 65: filling piece
- E: extension direction of the data carrier
- T: transverse extension direction of the data carrier 1

## Claims

1. Method of producing a data carrier (1) having a metal layer (5) with a recess (11), an electronic module (3) comprising a chip embedded in said recess (11), and a plastic layer (6) with embedded antenna wires (8), **characterized by** the method steps of:
- forming the recess (11) in the metal layer (5);
- coating the metal layer (5) with an insulating coating (50) creating an insulated metal layer (5', 5");
- laminating a plastic layer (6, 60, 61) onto the insulated metal layer (5', 5");
- milling through the recess (11) in the insulated metal layer (5') into the plastic layer (6); and
- inserting the electronic module (3) into the recess (11).

2. Method according to claim 1, wherein the milling step into the plastic layer (6) comprises a milling with the same circumference as or smaller than the recess (11) in the insulated metal layer (5') until a depth (15) revealing the antenna wires (8) in the plastics layer (6) or leaving an insulating distance for an inductive mode connection with the electronic module (3).

3. Method according to claim 2, wherein after the step of milling through the recess, the method further comprises the step of
milling a reduced recess (12) in the recess (11) creating a lower surface (25) in the plastic layer (6).

4. Method according to claim 3, wherein the inserting step comprises:
inserting the electronic module (3) into the reduced recess (12) wherein the electronic module (3) comprises at least two electric connections (7) outside its shaft connecting the electronic module (3) with the antenna wires (8) in the plastic layer (6) bringing each of the electric connections (7) into conductive or inductive contact with one of the antenna wires (8).

5. Method according to any one of claims 1 to 4, wherein the step of laminating a plastic layer (6, 61) onto the insulated metal layer (5') comprises:
- positioning a filling piece (65) having complementary dimensions to the recess (11) into the recess (11);
- positioning a first lamination plate (60) onto the upper surface (9) of the coated metal layer (5'),
- positioning a number of plastic layer components (61) comprising an antenna (8') and contacting antenna wires (8) on the lower surface of the coated metal layer (5'),
- positioning a second lamination plate below the lowest of the number of plastic layer components (61); and
- laminating the number of plastic layer components (61) together onto the coated metal layer (5').

6. Method according to any one of claims 1 to 5, wherein the step of laminating a plastic layer (6, 61) onto the insulated metal layer (5') comprises:
- either positioning a filling piece (65) having complementary dimensions to the recess (11) into the recess (11) or providing a first lamination plate (60) having an outgrowth portion complementary to the dimensions of the recess (11) and positioning the first lamination plate (60) onto the upper surface (9) of the coated metal layer (5') with the outgrowth portion into the recess (11);
- positioning a number of plastic layer components (61) comprising an antenna (8') and contacting antenna wires (8) on the lower surface of the coated metal layer (5'),
- positioning a second lamination plate (60) below the lowest of the number of plastic layer components (61);
- laminating the number of plastic layer components (61) together onto the coated metal layer (5').

7. Method according to any one of claims 1 to 6, wherein the antenna wires (8) are contacting the chip.

8. Data carrier (1) comprising
a metal layer (5) with a recess (11),
an electronic module (2) comprising a chip and being embedded in said recess (11), and
a plastic layer (6) with embedded antenna wires (8), wherein the electronic module (2) has a shaft portion, **characterized in that**
the metal layer (5) has an insulating coating (50) at least on the surfaces of the recess (11); and
each of the electric connections (7) is connecting one of the antenna wires (8).

9. Data carrier (1) according to claim 8, wherein chip contacting electric connections (7) are provided on the underside of the electronic module (2).

10. Data carrier (1) according to claim 8 or claim 9, wherein the plastic layer (6) comprises a recess (12) with the same circumference as or smaller than the recess (11) in the insulated metal layer (5') until a depth (15) revealing the antenna wires (8).
